# EUROPEAN PATENT APPLICATION

(11) **EP 3 470 960 A1**
(43) Date of publication of application: **17.04.2019**
(21) Application number: 18198280.2
(22) Date of filing: 02.10.2018
(51) Int. Cl.: G06F 3/01, G06F 1/16, G06F 3/03

(54) **HAPTIC EFFECTS WITH MULTIPLE PERIPHERAL DEVICES**

(30) Priority: 11.10.2017 US 201715730154
(71) Applicant: Immersion Corporation, San Jose, CA 95134 (US)
(72) Inventor: GRANT, Danny, Laval, Québec H7M 2A1 (CA); RIHN, William S., San Jose, CA California 95126 (US); SOSKIN, Leonard, San Jose, CA California 95134 (US)
(74) Representative: Hofstetter, Schurack & Partner

(57) **Abstract**

Rendering haptics using multiple peripheral devices includes sensing a respective position of two haptically-enabled devices, and applying a haptic effect on at least one of the two haptically-enabled devices based on the sensing of the respective position.

## Description

### FIELD

Example embodiments are directed to providing haptic effects with positional sensing, and more particularly, to providing haptic effects using multiple peripheral devices.

### BACKGROUND

An emerging trend in conventional gaming systems and virtual-reality ("VR")/ augmented-reality ("AR") systems is to use multiple peripheral devices. In order to provide a more realistic experience, some of these systems detect six degrees of freedom ("6DoF") movement of the multiple peripheral devices. These systems also generally provide kinesthetic or tactile feedback (commonly referred to as "haptic feedback") based solely on the movement of the peripheral device itself or the movement of an object represented by the peripheral device.

### SUMMARY

One embodiment renders haptics using multiple peripheral devices by sensing a respective position of two haptically-enabled devices, and applying a haptic effect on at least one of the two haptically-enabled devices based on the sensing of the respective position.

### BRIEF DESCRIPTION OF THE DRAWINGS

Example embodiments will be more clearly understood from the following detailed description taken in conjunction with the accompanying drawings. FIGS. 1-5B represent non-limiting, example embodiments as described herein.
FIG. 1 is a block diagram of a haptically-enabled system according to an example embodiment.
FIGS. 2A, 2B and 2C are diagrams of haptically-enabled devices according to example embodiments.
FIG. 3 is a block diagram of a system in a haptically-enabled device according to an example embodiment.
FIG. 4 is a flow diagram of rendering haptics with positional sensing according to an example embodiment.
FIG. 5A is an image of a magnetic field produced by a standard magnet according to an example embodiment.
FIG. 5B is an image of magnetic fields produced by a programmable magnet according to an example embodiment.

### DETAILED DESCRIPTION

Example embodiments are directed to providing haptic effects with positional sensing.

Example embodiments are directed to providing haptic effects by exerting a force between multiple peripheral devices, thereby resulting in a more immersive experience.

Haptics is a tactile and/or kinesthetic feedback technology that generates haptic feedback effects (also known as "haptic feedback" or "haptic effects"), such as forces, vibrations, and motions, for an individual using the individual's sense of touch. A haptically-enabled device can include embedded hardware (e.g., actuators or other output mechanisms) configured to apply the haptic effects. The embedded hardware is, generally, programmed to apply (or playback) a particular set of haptic effects. When a signal specifying which haptic effect to play is received by the haptically-enabled device, the haptically-enabled device renders the specified haptic effect. For example, when an individual is intended to experience a haptic event, the embedded hardware of the haptically-enabled device receives a play command through control circuitry. The embedded hardware then applies the appropriate haptic effect.

Example embodiments are directed to the application of haptic effects by at least two haptically-enabled devices exerting a force on each other. By applying the haptic effects using the force exerted between them, example embodiments provide a more immersive experience.

For instance, as an individual playing a video game uses hand spatial tracking to "cast a spell" by moving her/his hands in a gesture-based pattern of two alternating circles, a vibration haptic effect would be applied to the controllers in each of her/his hands by exerting a force on each of the controllers. A magnitude of the force can be proportional, or inversely proportional, to the distance between the controllers.

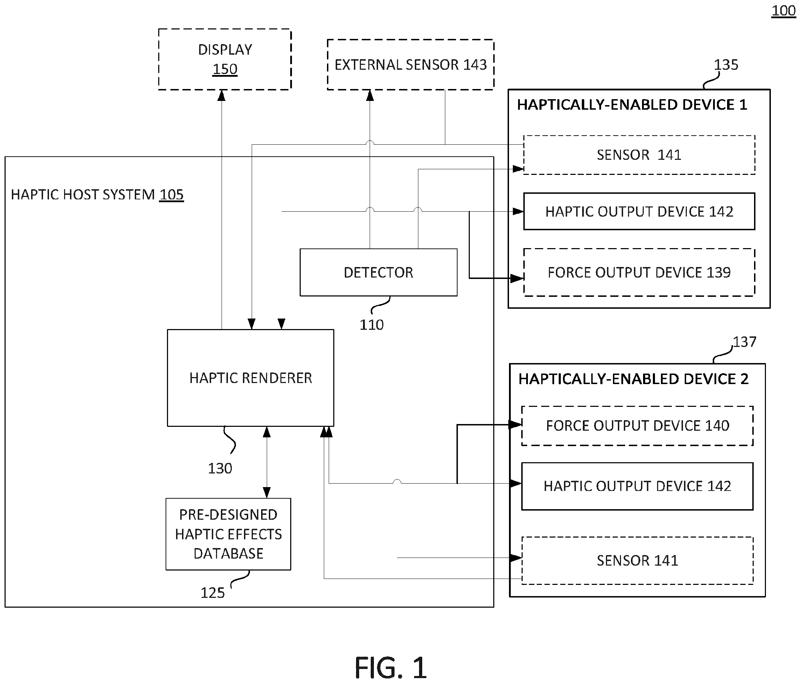

FIG. 1 is a block diagram of a haptically-enabled system according to an example embodiment.

Referring to FIG. 1, a haptically-enabled system 100 includes a detector 110 that detects movement of haptically-enabled devices 135, 137. Haptically-enabled system 100 further includes a haptic renderer 130 that generates a haptic signal encoding haptic effect(s) to play, and haptically-enabled devices 135, 137 that receive the haptic signal and apply the respective haptic effect(s). Haptically-enabled system 100 may include a pre-designed haptic effects database 125 from which pre-designed haptic effects are obtained.

Detector 110, pre-designed haptic effects database 125 and haptic renderer 130 can be in a haptic host system 105. Haptic host system 105 can be electrically and wirelessly connected to haptically-enabled devices 135, 137 held by an individual. Haptic host system 105 can be a gaming console or a host computer, and haptically-enabled devices 135, 137 can be handheld game controllers, or VR controllers.

However, example embodiments are not limited thereto. For example, detector 110 can be separate from haptic host system 105.

In an example embodiment, haptically-enabled system 100 can be used in a VR system or an AR system. As another example, haptically-enabled system 100 can be used for gaming, a sports event broadcast, surgery, or environments involving user navigation.

Detector 110 is configured to detect movement of haptically-enabled devices 135, 137, and transmit detected movement information to a sensor 141 in haptically-enabled devices 135, 137. Alternatively, sensor 141 can detect movement of haptically-enabled devices 135, 137.

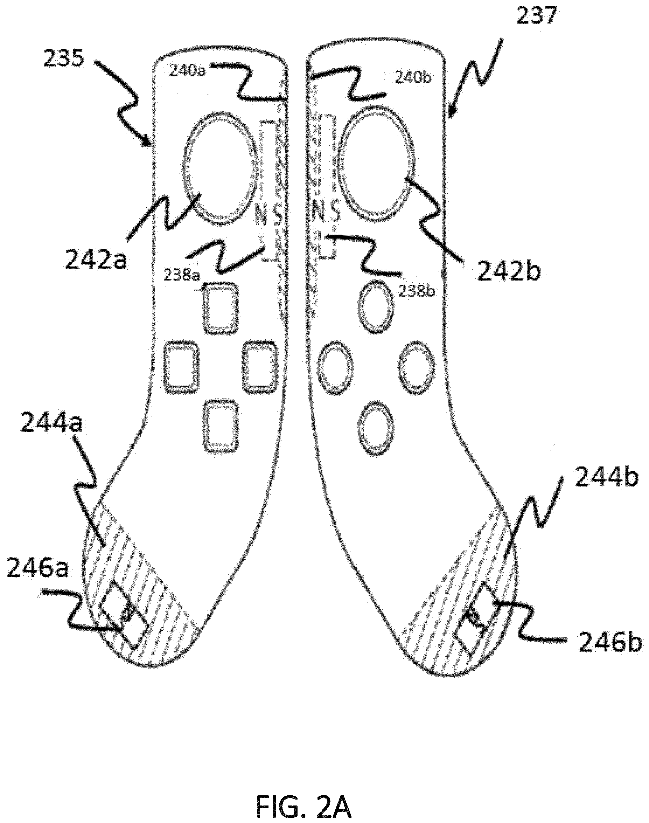

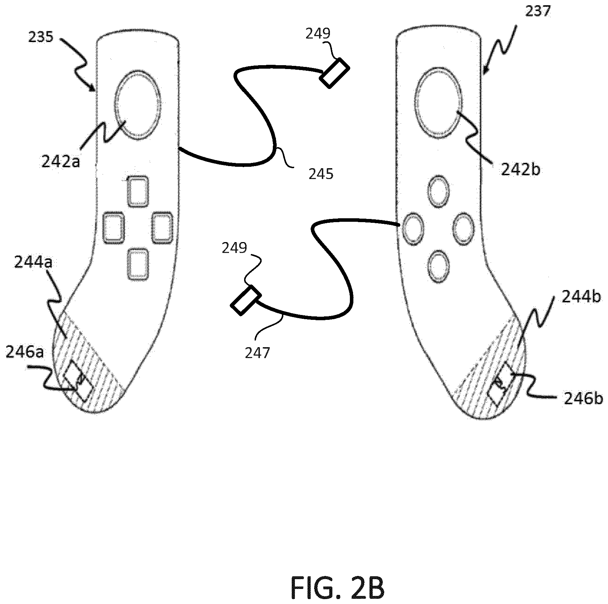

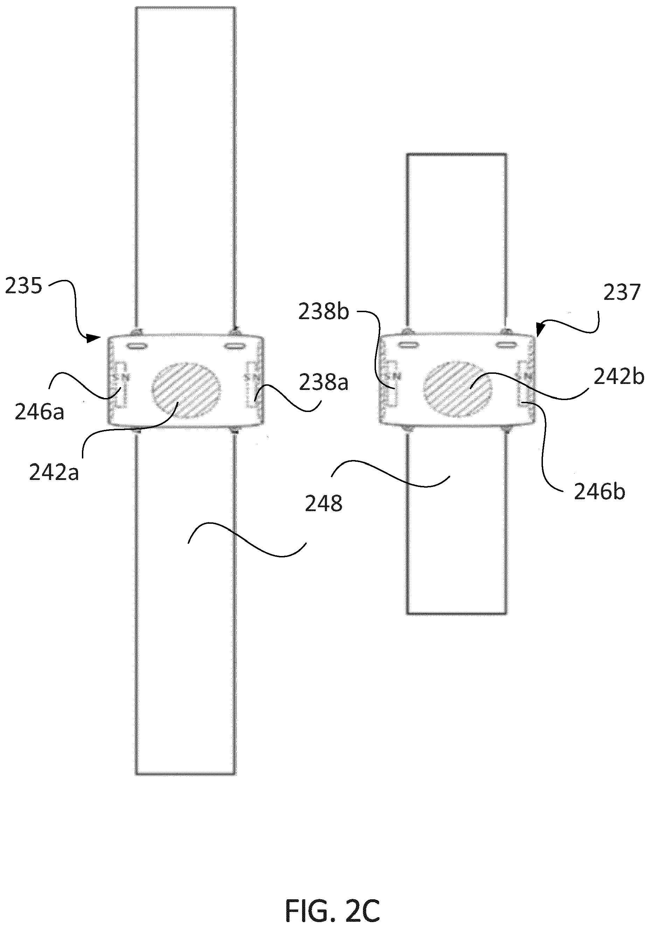

FIGS. 2A, 2B and 2C are diagrams of haptically-enabled, ungrounded devices according to example embodiments.

Referring to FIGS. 2A, 2B and 2C, haptically-enabled devices 235, 237 can each be, for instance, a separate peripheral device (e.g., an interface device such as a hand-held controller, a game pad, a computer mouse, a trackball, a keyboard, a tablet, a microphone, and a headset, or a wearable such as a vest) for a gaming system. Alternatively, haptically-enabled device 235, 237 can collectively form a single peripheral device (e.g., a single controller). For instance, haptically-enabled device 235 can be in a shape that conforms or interlocks to a shape of haptically-enabled device 237 such that, when haptically-enabled device 235, 237 are brought together, a single ergonomic controller is formed for the gaming system. For example, when placed into an "L" shape, haptically-enabled devices 235, 237 can interlock to form a hand gun. In an example embodiment, a housing of haptically-enabled devices 235, 237 could deform so as to cause the devices to interlock.

Haptically-enabled devices 235, 237 can include input components 242a, 242b (e.g., a thumbstick, a trigger button and/or a push button).

According to some example embodiments, haptically-enabled devices 235, 237 can include one or more attachment regions 240a, 240b and/or 244a, 244b. Force output devices 238a, 238b and/or 246a, 246b can be within attachment regions 240a, 240b and/or 244a, 244b. Force output devices 238a, 238b and/or 246a, 246b can each produce a force field. When the force field(s) produced by one or more of force output devices 238a or 246a in haptically-enabled device 235 interact with the force field(s) produced by one or more of force output devices 238b, 246b in haptically-enabled device 237, a force is exerted on haptically-enabled devices 235, 237. The force is sensed by internal sensors (element 141 in FIG. 1) within, and/or an external sensor (element 143 in FIG. 1) coupled to, haptically-enabled devices 235, 237.

Force output devices 238a, 238b and/or 246a, 264b can be magnetic, as shown in FIG. 2B. However, example embodiments are not limited thereto, and other means of applying a force to haptically-enabled devices 235, 237 can be used.

For instance, as shown in FIG. 2B, a tether 245 attached to haptically-enabled device 235 can magnetically couple to a tether 247 attached to haptically-enabled device 237 via magnets 249 attached to ends of tethers 245, 247. Tethers 245, 247 can provide a temporary or a permanent coupling between haptically-enabled devices 235, 237.

In another example embodiment, tethers 245, 247 can be actuated in order to pull haptically-enabled devices 235, 237 together.

In yet another example embodiment, only haptically-enabled device 235 can include a tether that couples to an attachment region of haptically-enabled device 237 and/or that is actuated to pull haptically-enabled devices 235, 237 together.

As shown in FIG. 2C, haptically-enabled devices 235, 237 can each be attached to a strap 248 to be worn by an individual.

Example embodiments are not limited to tethers, and, therefore, other mechanisms used to pull haptically-enabled device 235, 237 together can be used.

For instance, according to other example embodiments, the force exerted between haptically-enabled devices 235, 237 can be caused by forced-air emitted by one or both of haptically-enabled devices 235, 237. The forced-air can be emitted by, for instance, the force output devices (elements 139 and 140 in FIG. 1) on haptically-enabled devices 235, 237. For example, the force output devices can be air jets that emit a puff of air.

According to other example embodiments, disturbances in sound waves can cause the force exerted between haptically-enabled devices 235, 237. The sound waves can be produced by a phased or non-phased ultrasonic array, on each of haptically-enabled devices 235, 237. For instance, a first ultrasonic array on haptically-enabled device 235 can emit a first beam towards haptically-enabled device 237. Likewise, a second ultrasonic array on haptically-enabled device 237 can emit a second beam towards haptically-enabled device 235.

In the phased ultrasonic array, the beam(s) emitted from one or more probes of the ultrasonic array are focused and swept electronically without moving.

In the non-phased ultrasonic array, the beam(s) are emitted from the probe in a fixed direction.

In an example embodiment, haptically-enabled devices 235, 237 can both be under the control of one individual. In another example embodiment, haptically-enabled devices 235, 237 can each be under the control of different individuals.

Referring back to FIG. 1, a position of each of haptically-enabled devices 135, 137 is sensed. According to example embodiments, the absolute or relative position of haptically-enabled devices 135, 137 can be sensed. The absolute position is the position of a haptically-enabled device relative with respect to the frame of reference of the measurement system. The relative position is the position of haptically-enabled devices 135, 137 relative to each other.

The position of haptically-enabled devices 135, 137 can be sensed using sensor 141 within haptically-enabled device 135, 137. Sensor 141 can be an inertial sensor that detects change in inertia of haptically-enabled devices 135, 137. Some examples of inertial sensors include an accelerometer and a gyroscope.

In another example embodiment, the position of haptically-enabled devices 135, 137 can be sensed by analyzing images of haptically-enabled devices 135, 137 obtained from an external sensor 143. External sensor 143 can be an optical recording instrument (for instance, a camera) that captures the images of haptically-enabled devices 135, 137.

Sensor 141 and/or 143 senses absolute or relative positions of haptically-enabled devices 135, 137, and generates sensed positional information based on the sensed positions. Sensor 141 and/or 143 transmits the sensed positional information to haptic renderer 130.

Haptic renderer 130 uses haptic-rendering algorithms to compute haptic commands as a function of the sensed positional information, and generate haptic signals encoding the haptic commands for haptically-enabled devices 135,137. Thus, the positions of haptically-enabled devices 135, 137 sensed by sensor 141 and/or 143 are taken into account in the haptic-rendering algorithms as variables. For example, if the haptic effect is a continuous periodic, the magnitude of the periodic would be directly proportional to the relative distance between haptically-enabled devices 135, 137.

According to an example embodiment, haptic renderer 130 can select a pre-designed effect from a lookup table of the pre-designed effects stored in pre-designed haptic effects database 125. Upon selection, the pre-designed haptic effect can be modified based on the sensed positional information by adding haptic effects, removing unusable haptic effects, or changing (or editing) at least one parameter (e.g., location, magnitude (or intensity), frequency, duration, etc.) of the pre-designed haptic effect.

According to an example embodiment, high level parameters that define a particular haptic effect include location, magnitude, frequency, and duration. Low level parameters such as streaming motor commands could also be used to render a haptic effect. Some variation of these parameters can change the feel of the haptic effect, and/or can further cause the haptic effect to be considered "dynamic."

Haptic renderer 130 transmits the haptic signal(s) to haptically-enabled devices 135, 137.

The haptic effect(s) is applied by haptically-enabled devices 135, 137. The haptic effect(s) is applied by haptically-enabled devices 135, 137 exerting a force exerted between or on each other. Haptically-enabled device 135 provides a force feedback sensation on haptically-enabled device 137, and vice versa.

In an example embodiment, the force exerted between haptically-enabled devices 135, 137 can be generated from an interaction of a force field produced by a force output device 139 in haptically-enabled device 135 with a force field produced by a force output device 140 in haptically-enabled device 137. Thus, the force field produced by haptically-enabled device 135 provides a force feedback sensation on haptically-enabled device 137, and vice versa.

Force output devices 139, 140 can be a standard magnet, a programmable magnet or other devices known to produce a force field. The electromagnets can be used to create haptic detents as haptically-enabled devices 135, 137 pass each other. For example, for a bow and arrow interaction, a short haptic effect could be rendered that momentarily couples haptically-enabled devices 135, 137 (one representing the bow and the other to the arrow) together when haptically-enabled devices 135, 137 are placed together to notch the arrow. As haptically-enabled devices 135, 137 are pulled apart, a resistance haptic effect is applied to simulate the drawing of the arrow. The haptic command can specify the magnitude of the haptic effect to be played based on the strength of the force exerted between haptically-enabled devices 135, 137.

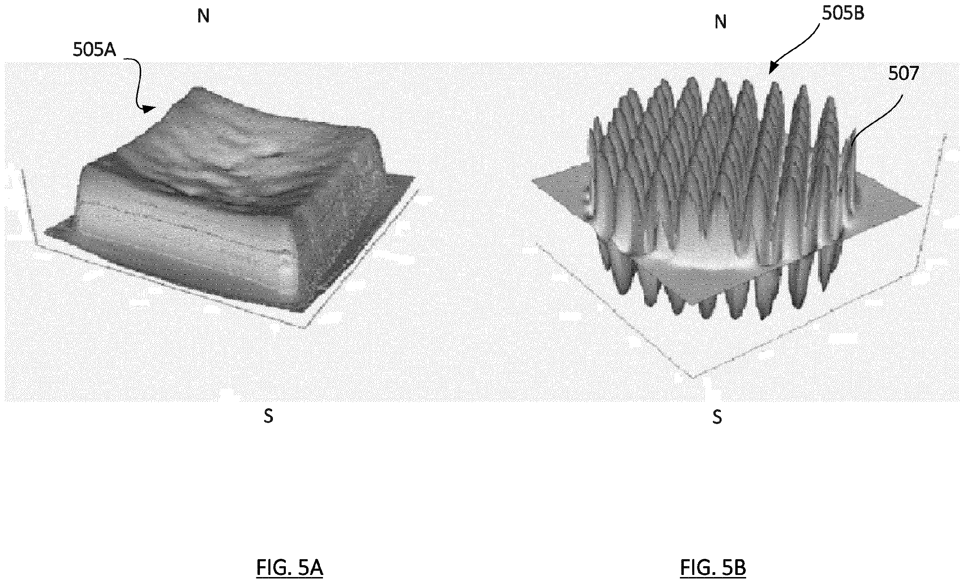

FIG. 5A is an image of a magnetic field produced by a standard magnet according to an example embodiment.

FIG. 5B is an image of magnetic fields produced by a programmable magnet according to an example embodiment.

In FIG. 5A, an image of a magnetic field 505A produced by a standard magnet (e.g., an electromagnet) including a single or individual magnetic element with a magnetic field of a singular polarity and strength is shown.

According to example embodiments, a programmable magnet can be used to render the haptic effect between haptically-enabled devices 135, 137 with a desired behavior as haptically-enabled devices 135, 137 move relative to each other.

In FIG. 5B, an image of magnetic fields 505B produced by a programmable magnet including a plurality of magnetic elements (as represented by each peak 507) is shown. Each of the plurality of magnetic elements has a magnetic field of various strength and polarity. When a pair of programmable magnets opposes, or faces, each other such that the magnetic elements thereon oppose or face each other, the corresponding opposing magnetic elements form pre-programmed correlated patterns designed to achieve a desired behavior. The programmable behavior is achieved by creating multipole structures comprising multiple magnetic elements of varying size, location, orientation, and saturation. Although FIG. 5B illustrates a programmable magnet having sixty-six magnetic elements (each represented by one of peaks 507) on a single or individual surface or substrate, the particular number of magnetic elements is exemplary and for use of illustration only. The number of magnetic elements can be varied according to application. Although each magnetic element has the same strength and polarity in FIG. 5B, the magnetic strength and polarity of any magnetic element can each be varied to achieve a desired behavior. Thus, programmable magnets are programmable in the sense that the magnetic strength and polarity of any magnetic element is designed or selected in order to achieve a desired behavior. However, the programmable aspect or nature of the magnet is complete after the programmable magnet is formed with a plurality of magnetic elements of various strength and polarity, and thus the programmable magnets can be considered to be "one-time" programmable magnets.

Force output devices 139, 140 can be exemplified in forms, other than the aforementioned magnets, that exert a force on haptically-enabled devices 135, 137. For instance, force output devices 139, 140 can be in the form of tethers, ultrasonic arrays, and/or forced air.

Haptic effects, other than those applied as a result of the exerted forces, can be applied such as a vibrotactile haptic effect, a deformation haptic effect, an ultrasonic haptic effect, and/or an electrostatic friction haptic effect. Application of the haptic effects can include applying a vibration using a tactile, deformation, ultrasonic and/or electrostatic source.

According to example embodiments, a magnitude of the haptic effect(s) can be proportional to a distance between haptically-enabled devices 135, 137. For example, if an individual playing a video game needs to use hand spatial tracking to "cast a spell," the individual can move the haptically-enabled devices in her/his hands in a gesture-based pattern of two alternating circles. When a first haptically-enabled device in the individual's right hand is moved near a second haptically-enabled device in the individual's left hand, a magnitude of the haptic effect applied by the first haptically-enabled device can increase. When the first haptically-enabled device is moved away from the second haptically-enabled device, the magnitude of the haptic effect applied by the first haptically-enabled device can decrease. Vice versa, when the second haptically-enabled device is moved near the first haptically-enabled device, a magnitude of the haptic effect applied by the second haptically-enabled device can increase. When the second haptically-enabled device is moved away from the first haptically-enabled device, the magnitude of the haptic effect applied by the second haptically-enabled device can decrease.

According to an alternative example embodiment, a magnitude of the haptic effect(s) can be inversely proportional to a distance between haptically-enabled devices 135, 137. For example, when the first haptically-enabled device in the individual's right hand is moved near the second haptically-enabled device in the individual's left hand, a magnitude of the haptic effect applied by the first haptically-enabled device can decrease. When the first haptically-enabled device is moved away from the second haptically-enabled device, the magnitude of the haptic effect applied by the first haptically-enabled device can increase. Vice versa, when the second haptically-enabled device is moved near the first haptically-enabled device, a magnitude of the haptic effect applied by the second haptically-enabled device can decrease. When the second haptically-enabled device is moved away from the first haptically-enabled device, the magnitude of the haptic effect applied by the second haptically-enabled device can increase.

Each of haptically-enabled devices 135, 137 according to example embodiments can also include a haptic output device 142. Haptic output device 142 is a device that includes mechanisms configured to output any form of haptic effects, such as vibrotactile haptic effects, electrostatic friction haptic effects, deformation haptic effects, ultrasonic haptic effects, etc. in response to the haptic drive signal.

Haptic output device 142 can be an electromechanical actuator, such as a piezoelectric actuator or an electroactive polymer ("EAP") actuator, to apply the haptic effect(s). In an example embodiment, the piezoelectric actuator can be a ceramic actuator or a macro-fiber composite ("MFC") actuator. However, example embodiments are not limited thereto. For instance, an electric motor, an electro-magnetic actuator, a voice coil, a shape memory alloy, a solenoid, an eccentric rotating mass motor ("ERM"), a linear resonant actuator ("LRA"), or a high bandwidth actuator can be used in addition to haptic output device 142 and force output devices 139, 140.

In an alternative example embodiment, a direct current ("DC") motor can be used, alternatively or in addition, to haptic output device 142 to apply the vibration.

In other example embodiments, haptically-enabled devices 135, 137 can include non-mechanical devices to apply the haptic effect(s). The non-mechanical devices can include electrodes implanted near muscle spindles of a user to excite the muscle spindles using electrical currents firing at the same rate as sensory stimulations that produce the real (or natural) movement, a device that uses electrostatic friction ("ESF") or ultrasonic surface friction ("USF"), a device that induces acoustic radiation pressure with an ultrasonic haptic transducer, a device that uses a haptic substrate and a flexible or deformable surface or shape changing device and that can be attached to an individual's body, a device that provides projected haptic output such as forced-air (e.g., a puff of air using an air jet), a laser-based projectile, a sound-based projectile, etc.

According to an example embodiment, the laser-based projectile uses laser energy to ionize air molecules in a concentrated region mid-air so as to provide plasma (a concentrated mixture of positive and negative particles). The laser can be a femtosecond laser that emits pulses at very fast and very intense paces. The faster the laser, the safer for humans to touch. The laser-based projectile can appear as a hologram that is haptic and interactive. When the plasma comes into contact with an individual's skin, the individual can sense the vibrations of energized air molecules in the concentrated region. Sensations on the individual skin are caused by the waves that are generated when the individual interacts with plasma in mid-air. Accordingly, haptic effects can be provided to the individual by subjecting the individual to a plasma concentrated region. Alternatively, or additionally, haptic effects can be provided to the individual by subjecting the individual to the vibrations generated by directed sound energy.

According to example embodiments, the haptically-enabled system 100 can be configured to detect six degrees of freedom ("6DoF") movement of each of haptically-enabled devices 135, 137. 6Dof refers to the freedom of movement of a body in a three-dimensional space by changing position in translation (e.g., forward/backward, up/down, and/or left/right) and orientation (e.g., along the normal axis (yaw), the lateral axis (pitch) and the longitudinal axis (roll)).

Haptically-enabled system 100 can include a visual display 150 to display the event to the individual when rendering the haptic effect. The visual display 150 can be a part of a gaming system, a virtual reality/augmented reality system, a sports broadcast system, or a similar system.

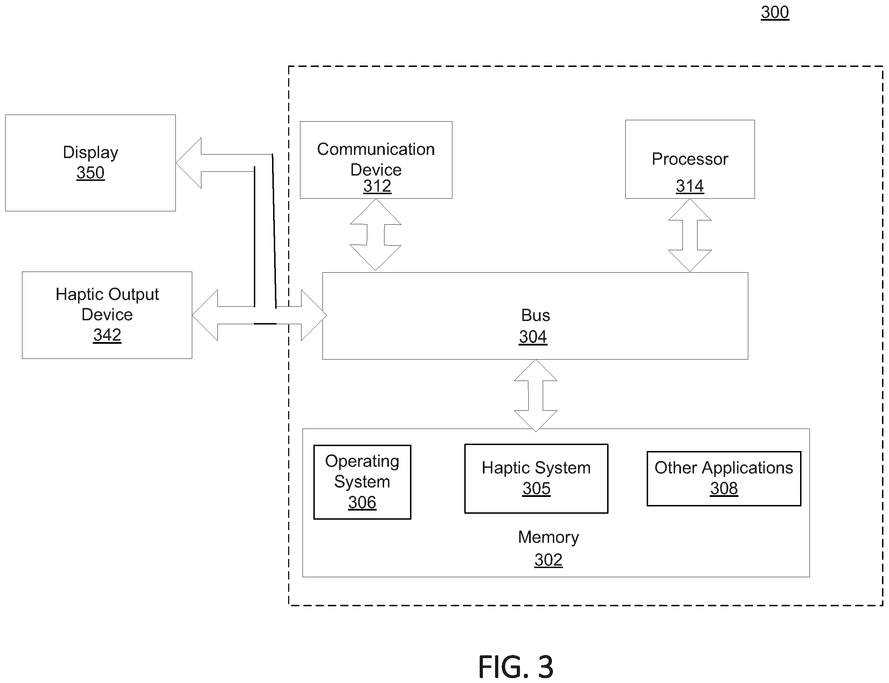

FIG. 3 is a block diagram of a system in a haptically-enabled device according to an example embodiment. Some or all of the components of FIG. 3 can also be used to implement any of the elements of FIG. 1.

Referring to FIG. 3, a system 300 in a haptically-enabled device according to an example embodiment provides haptic functionality for the device.

Although shown as a single system, the functionality of system 300 can be implemented as a distributed system. System 300 includes a bus 304 or other communication mechanism for communicating information, and a processor 314 coupled to bus 304 for processing information. Processor 314 can be any type of general or specific purpose processor. System 300 further includes a memory 302 for storing information and instructions to be executed by processor 314. Memory 302 can be comprised of any combination of random access memory ("RAM"), read only memory ("ROM"), static storage such as a magnetic or optical disk, or any other type of non-transitory computer-readable medium.

A non-transitory computer-readable medium can be any available medium that can be accessed by processor 314, and can include both a volatile and nonvolatile medium, a removable and non-removable medium, a communication medium, and a storage medium. A communication medium can include computer readable instructions, data structures, program modules, or other data in a modulated data signal such as a carrier wave or other transport mechanism, and can include any other form of an information delivery medium known in the art. A storage medium can include RAM, flash memory, ROM, erasable programmable read-only memory ("EPROM"), electrically erasable programmable read-only memory ("EEPROM"), registers, hard disk, a removable disk, a compact disk read-only memory ("CD-ROM"), or any other form of a storage medium known in the art.

According to an example embodiment, memory 302 stores software modules that provide functionality when executed by processor 314. The software modules include an operating system 306 that provides operating system functionality for system 300, as well as the rest of the haptically-enabled device. The software modules can also include a haptic system 305 that senses a position of the two haptically-enabled devices and provides haptic functionality by the two haptically-enabled devices exerting a force on each other (as described above). However, example embodiments are not limited thereto. For instance, haptic system 305 can be external to the haptically-enabled devices, for example, in a central gaming console in communication with two or more haptically-enabled devices. The software modules further include other applications 308, such as, an audio-to-haptic conversion algorithm.

System 300 can further include a communication device 312 (e.g., a network interface card) that provides wireless network communication for infrared, radio, Wi-Fi, or cellular network communications. Alternatively, communication device 312 can provide a wired network connection (e.g., a cable/Ethernet/fiber-optic connection, or a modem).

Processor 314 is further coupled via bus 304 to a visual display 340 (e.g., a light-emitting display ("LED") or a liquid crystal display ("LCD")) for displaying a graphical representation or a user interface to an end-user. Visual display 340 can be a touch-sensitive input device (i.e., a touch screen) configured to send and receive signals from processor 314, and can be a multi-touch touch screen.

System 300 further includes a haptic output device 342. Processor 314 can transmit a haptic signal associated with a haptic effect to haptic output device 342, which in turn outputs haptic effects (e.g., vibrotactile haptic effects or deformation haptic effects).

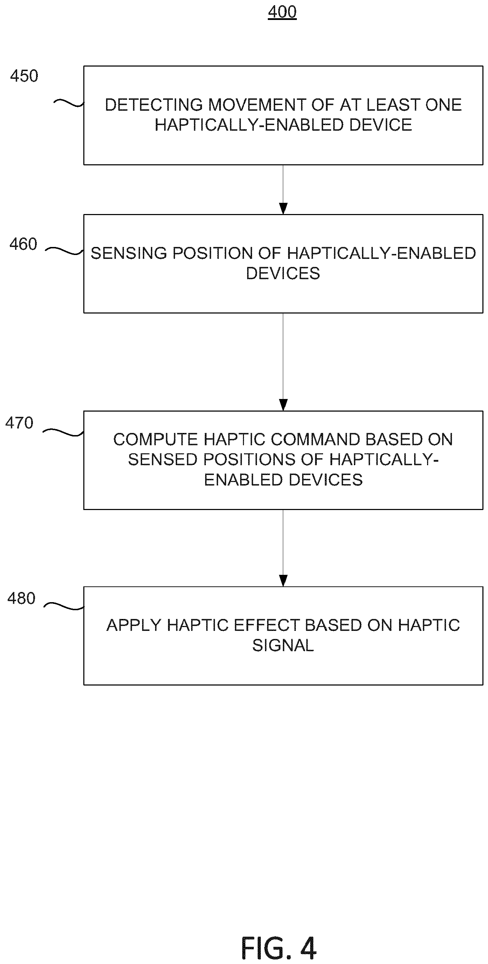

FIG. 4 is a flow diagram of rendering haptics according to an example embodiment.

Referring to FIG. 4, the rendering of haptics according to example includes detecting movement of at least one of the two haptically-enabled devices, at 450, and sensing a respective position of two haptically-enabled devices, at 460.

The sensing of the respective position of the two haptically-enabled devices can include using at least one of inertial sensors or an optical recording instrument. The inertial sensors can be respectively positioned within the two haptically-enabled devices. The optical recording instrument can be positioned external to the two haptically-enabled devices.

At 470, a haptic effect can be computed using a haptic-rendering algorithm having the sensed positions of the two haptically-enabled devices as variables.

The computing of the haptic effect can include determining one or more parameters such as a location to apply the haptic effect, magnitude, frequency, duration, etc.

According to an example embodiment, only certain portions of the detected movement can be sensed and haptified rather than the entire movement detected.

In an alternative or additional example embodiment, the computing of the haptic effect can include selecting a pre-designed haptic effect from a pre-designed haptic effects database (e.g., based on a lookup table of the pre-designed effects stored in the pre-designed haptic effects database). Upon selection, the pre-designed haptic effects can be modified or tuned by changing (or, editing) at least one parameter of the haptic effects based on the sensed positions of the two haptically-enabled devices. The modification or tuning can be performed by a haptic editor (a person making an edit to the haptic metadata), haptic modification tools (such as the haptic renderer), etc.

At 480, the haptic effect is applied by at least one of the two haptically-enabled devices based on the sensing of the position. The haptic effect is applied by the two haptically-enabled devices exerting force on each other. The forces exerted between the two haptically-enabled devices can be generated from an interaction of a force field produced by a force output device in a first haptically-enabled device with a force field produced by a force output device in a second haptically-enabled device. The force output devices can be a standard magnet, a programmable magnet or other devices known to produce a force field. Alternatively, as explained in further detail above, a tether, forced-air or an ultrasound array could be used to exert the force between the two haptically-enabled devices.

A magnitude of the force exerted on the haptically-enabled devices can correspond to a desired magnitude of the haptic effect.

The haptic effect can be applied by applying a resistance force when a force is exerted on the two haptically-enabled devices. For instance, a resistance force can be applied when an individual is squeezing a virtual object. As another example embodiment, a pushing force can applied to the two haptically-enabled devices, for example, to represent disturbances in vehicle motion. As yet another example, a pulling force can be exerted on the two haptically-enabled devices, for example, in the bow and arrow interaction described above. The haptic command can specify the desired magnitude of the haptic effect to be played, and the strength of the force exerted between the two haptically-enabled devices corresponds to the desired magnitude.

A magnitude of the haptic effect can be proportional, or inversely proportional, to the distance between the two-haptically enabled devices. For instance, the resistance force (applied when the force is exerted between the two haptically-enabled devices) can increase as the distance between the two haptically-enabled devices increases, and the resistance force can decrease as the distance between the two haptically-enabled device decreases. Alternatively, the resistance force can decrease as the distance between the two haptically-enabled devices increases, and the resistance force can increase as the distance between the two haptically-enabled devices decreases.

According to example embodiments, the rendering haptic effects includes positional sensing of two haptically-enabled devices, and applying haptic effects based on the sensed positions of the two haptically-enabled devices by exerting a force between the two haptically-enabled devices, thereby using spatial awareness tracking to render haptics on the two haptically-enabled devices.

The foregoing is illustrative of various example embodiments and is not to be construed as limiting thereof. Accordingly, all such modifications are intended to be included within the scope of the disclosure as defined in the claims.

## Claims

1. A method of rendering haptics in a haptically-enabled system, comprising:
sensing a respective position of two haptically-enabled devices; and
applying a haptic effect on at least one of the two haptically-enabled devices based on the sensing of the respective position.

2. The method of claim 1, wherein the sensing of the respective position of the two haptically-enabled devices includes using at least one of (i) inertial sensors respectively positioned within the two haptically-enabled devices or (ii) an optical recording instrument positioned external to the two haptically-enabled devices.

3. The method of claim 1, wherein a magnitude of the haptic effect is proportional or inversely proportional to a distance between the two haptically-enabled devices.

4. The method of claim 1, wherein
the applying of the haptic effect includes exerting a force between the two haptically-enabled devices, and
the force is caused by at least one of (i) a first haptically-enabled device of the two haptically-enabled devices providing a first force feedback sensation on a second haptically-enabled device of the two haptically-enabled devices, or (ii) the second haptically-enabled device providing a second force feedback sensation on the first haptically-enabled device;
or
wherein the applying of the haptic effect includes using at least one of a magnet, a tether, forced-air or an ultrasound array to exert a force between the two haptically-enabled devices;
or
wherein the applying of the haptic effect includes applying a resistance force when a pushing force or a pulling force is exerted on the two haptically-enabled devices.

5. The method of claim 1, wherein the haptically-enabled system is configured to detect six degrees of freedom (6DoF) movement of the two haptically-enabled devices.

6. The method of claim 5, wherein
the applying of the haptic effect includes exerting a force between the two haptically-enabled devices, and
a magnitude of the force exerted on the haptically-enabled devices corresponds to a desired magnitude of the haptic effect.

7. A haptically-enabled system, comprising:
at least two haptically-enabled devices each configured to apply a haptic effect based on a respective position of the at least two haptically-enabled devices.

8. The haptically-enabled system of claim 7, further comprising:
at least one of (i) inertial sensors respectively positioned within the two haptically-enabled devices or (ii) an optical recording instrument positioned external to the two haptically-enabled devices,
wherein the respective position of the two haptically-enabled devices is sensed using the at least one of inertial sensors or the optical recording instrument.

9. The haptically-enabled system of claim 7, wherein a magnitude of the haptic effect is proportional or inversely proportional to a distance between the two haptically-enabled devices.

10. The haptically-enabled system of claim 7, wherein the at least two haptically-enabled devices are each configured to apply the haptic effect by at least one of (i) a first haptically-enabled device of the two haptically-enabled devices being configured to provide a first force feedback sensation on a second haptically-enabled device of the two haptically-enabled devices, or (ii) the second haptically-enabled device being configured to provide a second force feedback sensation on the first haptically-enabled device.

11. The haptically-enabled system of claim 10, wherein
a magnitude of the first force feedback sensation corresponds to a desired magnitude of a first haptic effect applied by the first haptically-enabled device, and
a magnitude of the second force feedback sensation corresponds to a desired magnitude of a second haptic effect applied by the second haptically-enabled device.

12. The haptically-enabled system of claim 7, further comprising:
a force output device on at least one of the at least two haptically-enabled devices and configured to exert a force between the at least two haptically-enabled devices,
wherein the force output device is at least one of a magnet, a tether, forced-air or an ultrasound array;
or
wherein the at least two haptically-enabled devices are each configured to apply the haptic effect in the form of a resistance force when a pushing force or a pulling force is exerted on the two haptically-enabled devices.

13. The haptically-enabled system of claim 7, wherein the haptically-enabled system is configured to detect six degrees of freedom (6DoF) movement of the two haptically-enabled devices.

14. A non-transitory computer readable medium having instructions stored thereon that, when executed by a processor, cause the processor to perform the operations comprising:
sensing a respective position of two haptically-enabled devices; and
applying a haptic effect on at least one of the two haptically-enabled devices based on the sensing of the respective position.

15. The non-transitory computer readable medium of claim 14, wherein
the applying of the haptic effect includes exerting a force between the two haptically-enabled devices, and
the force is caused by at least one of (i) a first haptically-enabled device of the two haptically-enabled devices providing a first force feedback sensation on a second haptically-enabled device of the two haptically-enabled devices, or (ii) the second haptically-enabled device providing a second force feedback sensation on the first haptically-enabled device;
or
wherein the applying of the haptic effect includes exerting a force between the two haptically-enabled devices,
a magnitude of the force exerted on the haptically-enabled devices corresponds to a desired magnitude of the haptic effect, and
the desired magnitude of the haptic effect is proportional or inversely proportional to a distance between the two haptically-enabled devices;
or
wherein the applying of the haptic effect includes using at least one of a magnet, a tether, forced-air or an ultrasound array to exert a force between the two haptically-enabled devices.
